# EUROPÄISCHE PATENTSCHRIFT

(11) **EP 1 711 305 B1**
(45) Veröffentlichungstag und Bekanntmachung des Hinweises auf die Patenterteilung: **15.12.2010**
(21) Anmeldenummer: 05700345.1
(22) Anmeldetag: 01.02.2005
(51) Int. Cl.: B23P 11/00, F01L 1/047, F16H 53/02, B21D 53/84, F16D 1/072

(54) **VERFAHREN ZUM HERSTELLEN EINER NOCKENWELLE**
METHOD FOR PRODUCING A CAMSHAFT
PROCÉDÉ POUR PRODUIRE UN ARBRE À CAMES

(30) Priorität: 06.02.2004 CH 182042004
(43) Veröffentlichungstag der Anmeldung: 18.10.2006
(73) Patentinhaber: Merz, Karl, CH-5734 Reinach/AG (CH)
(72) Erfinder: Merz, Karl, CH-5734 Reinach/AG (CH)
(74) Vertreter: Ottow, Jens M.
(86) Internationale Anmeldenummer: PCT/CH2005/000050
(87) Internationale Veröffentlichungsnummer: WO 2005/075143

(56) Entgegenhaltungen:
- WO-A-01/98020
- WO-A-02/100588
- WO-A-03/012262
- DE-A1- 2 922 509
- GB-A- 2 187 405
- GB-A- 2 290 599
- US-A- 5 598 631
- US-B1- 6 182 361

## Beschreibung

### TECHNISCHES GEBIET

Die vorliegende Erfindung bezieht sich auf das Gebiet der gebauten Nockenwellen. Sie betrifft ein Verfahren zur Herstellung einer Nockenwelle gemäss dem Oberbegriff des Anspruchs 1.

Ein solches Verfahren ist aus der GB 2 187 405 A bekannt.

### STAND DER TECHNIK

Gebaute Nockenwellen werden im Unterschied zu geschmiedeten Nockenwellen dadurch hergestellt, dass die Nocken zunächst als separate Bauteile hergestellt und anschliessend auf einer geeigneten Welle mit vorgegebenen Abständen und vorgegebener Orientierung befestigt werden. Sowohl die Herstellung der Nocken als auch ihre Befestigung auf der meist rohrförmigen Welle können auf unterschiedliche Art und Weise erfolgen.

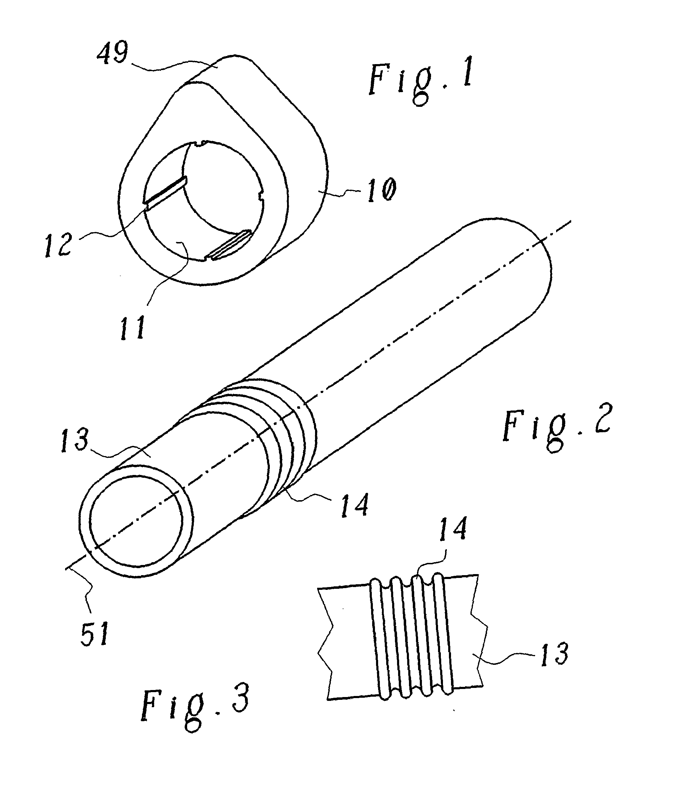

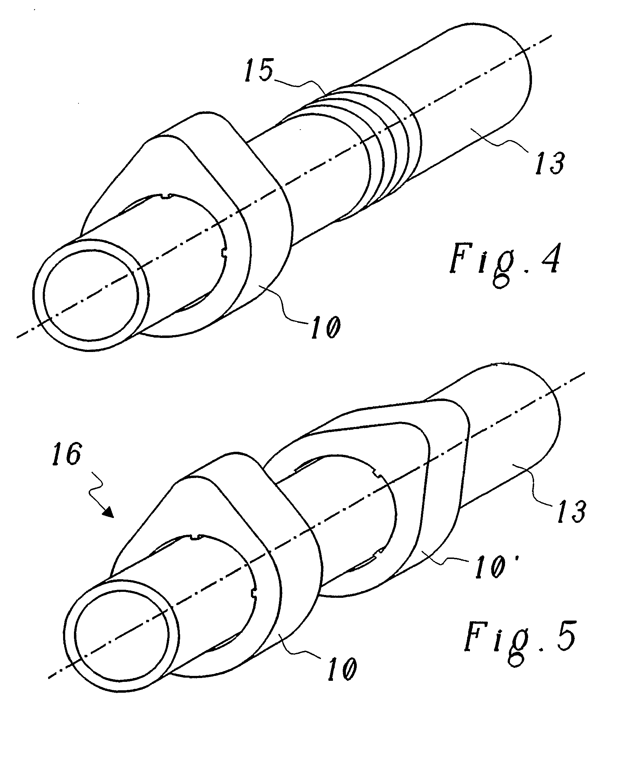

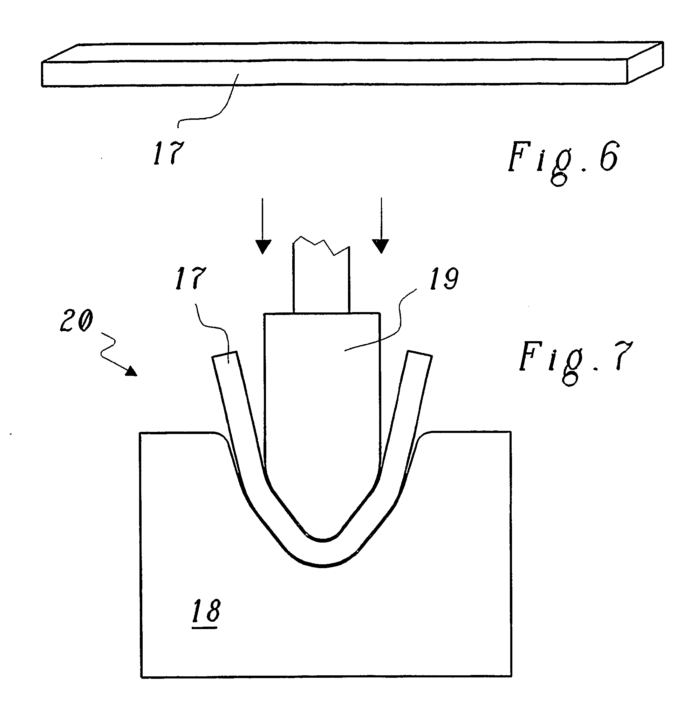

Aus der WO-A1-03/012262 ist es bekannt, Nocken durch Herstellen eines gezogenen Rohrprofils zu erzeugen, welches dann jeweils auf Nockenbreite abgeschnitten wird. Die so erzeugten Nocken werden dann auf eine meist hohle, rohrförmige Welle in axialer Richtung aufgeschoben und auf der Welle befestigt. Dies kann durch unterschiedliche Fügeverfahren erfolgen, wie z.B. Laserschweissen, Aufweiten der hohlen Welle durch Innenhochdruckumformung (IHU) oder durch kraft- und formschlüssiges axiales Aufschieben auf einen Bereich der Welle, dessen Aussendurchmesser grösser ist als der Innendurchmesser der Nocke. Der Kraft- und Formschluss kann dabei durch Erhebungen oder Vertiefungen im Grundkreisbereich der Nocke verbessert werden (Fig. 6 der WO-A1-03/012262). Durch die von der Kreisform abweichende Nockenform entsteht bei dieser Art der Nockenherstellung im Bereich der Erhebung der Nocke ein Hohlraum zwischen Welle und Nockeninnenseite, der die mechanische Stabilität der Nocke beinträchtigen kann. In der WO-A1-03/012262 ist deshalb vorgeschlagen worden (Fig. 4), zur mechanischen Abstützung in diesem Hohlraum einen Stopfen anzubringen, oder den Hohlraum durch seitlich angeschweisste Deckel zu verschliessen. Weiterhin kann die Umschliessung (der Umschliessungswinkel) zwischen Nocke und Welle dadurch erhöht werden, dass beim als Nocke verwendeten Rohrabschnitt die Wanddicke in geeigneter Weise variiert wird (Fig. 3). Aufwändig und unflexibel ist bei dieser Lösung jedoch die Art der Nockenherstellung: Da das Ausgangsmaterial bereits in Rohrform vorliegt, ist eine Bearbeitung der Rohrinnenseite zur Erzeugung von Erhebungen oder dgl. bzw. eine umformtechnische lokale Änderung der Wanddicke der Rohrwand zur Veränderung des Umschliessungswinkels mit grösseren Schwierigkeiten verbunden. Zudem müssen aus ökonomischen Gründen Rohre mit mehreren Metern Länge und damit eine Vielzahl von Nocken gleichzeitig verarbeitet werden, wodurch die Fertigung weniger flexibel ist. Schliesslich ist es bei dem rohrförmigen Ausgangsmaterial wesentlich aufwändiger, ein aus mehreren (z.B. gut härtbaren und gut schweissbaren) Schichten bestehendes Material herzustellen und zu verwenden, um die mechanischen Eigenschaften der Nockenwelle zu optimieren.

Aus der WO-A1-03/008842 ist ein Verfahren zur Herstellung einer Nockenwelle bekannt, bei dem die Nocken aus wenigstens einem napfartigen Blechteil mit einem Boden gebildet werden. Im Boden ist eine Aufnahmeöffnung für eine rohrförmige Welle vorgesehen. Die Nocke wird auf der Welle mittels einer Hülse befestigt, die auf die Welle aufgeschoben ist und durch die Aufnahmeöffnung der Nocke hindurchreicht, und als Verbindungsglied zwischen Welle und Nocke wirkt. Die Hülse ist sowohl mit der Nocke als auch mit der Welle form-, kraft- und/oder materialschlüssig verbunden. Die Herstellung der Nocke ist einfach und flexibel. Die Befestigung der Nocke auf der Welle ist wegen der zwischengeschalteten Hülse jedoch vergleichsweise aufwändig und kompliziert.

Aus der DE-C1-101 50 093 ist ein Verfahren zur Herstellung von Nockenwellen bekannt, bei dem die Nockenringe zunächst in einem getrennten Verfahren funktionsgerecht hergestellt und dann mit einer Hohlwelle durch ein IHU-Verfahren kraft- und formschlüssig verbunden werden. Die Nocken sind zweischichtig aufgebaut und bestehen aus zwei kraft- und formschlüssig miteinander verbundenen Ringen unterschiedlichen Materials. Der aus einem weichen, plastisch verformbaren Material bestehende innere Ring kann dabei im Bereich der Erhebung der Nocke dicker ausgebildet sein. Bei dieser Lösung sind ähnliche Nachteile vorhanden, wie bei der o.g. WO-A1-03/012262.

Aus der US-A-4,774,852 ist eine Nockenwelle bekannt, bei der eine aus Vollmaterial bestehende (z.B. gesinterte) Nocke mit einer kreisförmigen Durchgangsöffnung auf einer Hohlwelle mittels eines axial geschlitzten Zwischenrings befestigt wird. Diese Art der Nockenbefestigung hat sich in der Praxis nicht durchgesetzt. Andere Arten der Befestigung von geschmiedeten oder gesinterten Nocken auf Hohlwellen erreichen eine form- und kraftschlüssige Verbindung zwischen den Nocken und der Welle dadurch, dass auf der Welle durch Umformungen (z.B. Aufrollen eines Nullsteigungsgewindes) abschnittsweise ein vergrösserter Aussendurchmesser erzeugt wird. Die vorgefertigte Nocke, deren Durchgangsöffnung zumindest partiell einen kleineren Durchmesser aufweist, wird dann auf den Wellenabschnitt mit vergrössertem Aussendurchmesser axial aufgeschoben, wobei Verformungen an der Welle auftreten. Beispiele für derartige Befestigungsmethoden sind aus der US-A-5,598,631, der EP-B1-0 291 902, der US-A-5,307,708 oder der US-B2-6,502,538 bekannt. Nachteilig ist hierbei der aufwändige Prozess zur Herstellung der einzelnen Nocken.

Schliesslich ist es aus der WO-A1-01/98020 des Anmelders bekannt, Nocken für eine gebaute Nockenwelle aus geraden, länglichen Profilstreifen durch entsprechendes Biegen der Profilstreifen und Verschweissen der freien Enden herzustellen und die so hergestellten Nocken auf eine Hohlwelle aufzuschieben und mit dieser mittels Laserschweissen oder Widerstandsschweissen stoffschlüssig zu verbinden. In diesem Zusammenhang ist vom Anmelder auch vorgeschlagen worden (\NO-A1-02/100588), die Nocken selbst aus wenigstens zwei unterschiedlichen Materialien herzustellen, die für den jeweiligen Einsatzzweck (Kipphebel-Ablauffläche, Schweissverbindung) optimiert sind. Die Herstellung der Nocken aus ein- oder mehrschichtigen Profilstreifen durch entsprechendes Biegen und Verschweissen der freien Enden stellt eine einfache, elegante, flexible, material- und kostensparende Fertigungsmethode dar, die erheblich zur Gewichtsverringerung und Verbilligung der gebauten Nockenwellen beiträgt. Darüber hinaus lassen sich mit dieser Methode auf einfache Weise Nockenformen und Nockengruppen mit eng aufeinanderfolgenden, unterschiedlichen Laufflächen realisieren. Das Verschweissen der gebogenen und verschweissten Nocken mit der Hohlwelle erfordert allerdings einen vergleichsweise grossen apparativen Aufwand und stellt hohe Anforderungen an die Prozessführung.

### DARSTELLUNG DER ERFINDUNG

Es ist daher Aufgabe der Erfindung, ein Verfahren zur Herstellung einer Nockenwelle anzugeben, welches die Vorteile der aus Profilstreifen hergestellten Nocken mit einer vereinfachten Befestigungstechnik kombiniert.

Die Aufgabe wird durch die Gesamtheit der Merkmale des Anspruchs 1 gelöst. Der Kern der Erfindung besteht darin, eine gebaute Nockenwelle dadurch herzustellen, einzelne Nocken, die jeweils aus einem oder mehreren Profilstreifen durch Umformen, insbesondere Biegen, in Ringform und Verschweissen der freien Enden hergestellt worden sind, durch axiales Aufschieben auf eine Welle form- und/oder kraftschlüssig mit der Welle zu verbinden. Dabei ist zu bedenken, dass die Nocken wegen der Art der Herstellung aus einem Profilstreifen in der Regel auf der Welle einen Umschliessungswinkel haben, der deutlich kleiner ist als 360°. Damit steht nicht nur für den Form- und/oder Kraftschluss mit der Welle in der Regel weniger Umfangsfläche zur Verfügung, sondern es existiert auch im Bereich der Erhebung der Nocke ein Hohlraum zwischen der Innenwand der Nocke und der Welle, so dass die Nocke in diesem Bereich mechanisch weniger stabil ist. Es müssen daher je nach Art und Grösse der an der Nocke angreifenden Kräfte zusätzliche Massnahmen vorgesehen werden, um eine unerwünschte Verformung oder sogar Beschädigung der Nocke im Betrieb zu vermeiden.

Gemäss einer bevorzugten Ausgestaltung der Erfindung ist die Welle rohrförmig ausgebildet. Hierdurch wird nicht nur Material eingespart, sondern auch das Gewicht und Trägheitsmoment der fertigen Nockenwelle deutlich verringert.

Eine andere bevorzugte Ausgestaltung der Erfindung ist dadurch gekennzeichnet, dass die Welle in den Abschnitten, in denen die Nocken platziert sind, einen vergrösserten Aussendurchmesser aufweist, wobei insbesondere in den Abschnitten mit dem vergrösserten Aussendurchmesser umlaufende Wülste in die Welle eingearbeitet sind. Durch diese Massnahmen wird auf einfache Weise eine sichere Befestigung der Nocken erreicht.

Im Zusammenhang mit der Vergrösserung des Aussendurchmessers wird ein besonders belastbarer drehfester Sitz der Nocken dadurch erreicht, dass die Nocken auf der Ringinnenseite Mittel zur Erzeugung eines Formschlusses mit der Welle aufweisen, welche Mittel insbesondere radial nach innen abstehende Vorsprünge oder Rippen umfassen. Diese Vorsprünge oder Rippen graben sich beim Aufschieben der Nocken auf die Welle in Bereiche mit vergrössertem Aussendurchmesser ein und bewirken so einen besonders effektiven Formschluss.

Die freien Enden der Nocken sind vorzugsweise mittels Widerstandsschweissen verschweisst. Die bei der Widerstandsschweissung entstehenden Wülste um die Schweissnaht herum müssen zumindest auf der Aussenseite durch Nachbearbeitung entfernt werden. Auf der Innenseite der Nocken können die Wülste als Mittel zum Herbeiführen eines Formschlusses eingesetzt werden. Soll dies nicht geschehen, können die Wülste dadurch neutralisiert werden, dass die Nocken im Bereich der Schweissnaht auf der Ringinnenseite eine Aussparung aufweisen, welche die beim Schweissen gebildete Wulst aufnimmt.

Eine weitere bevorzugte Ausgestaltung des erfinderischen Verfahrens ist dadurch gekennzeichnet, dass die Nocken aus eine Profilstreifen mit einer über die Streifenlänge variierenden Dicke hergestellt werden, derart, dass die Nocken die Welle mit einem Umschliessungswinkel umschliessen, welcher grösser ist als der bei gleichbleibender Streifendicke des Profilstreifens durch die Nockenform vorgegebene Umschliessungswinkel, und insbesondere 360° beträgt. Dabei kann der Profilstreifen zwei symmetrisch zu einer Mittelebene angeordnete Schultern oder in der Mitte eine Verdickung aufweisen. Die Vergrösserung des Umschliessungswinkels ergibt eine verbesserte form- und/oder kraftschlüssige Verbindung zwischen den Nocken und der Welle.

Eine andere bevorzugte Ausgestaltung der Nockenwelle nach der Erfindung zeichnet sich dadurch aus, dass die Nocken aus einem Profilstreifen konstanter Dicke hergestellt werden, und dass durch einen Umformprozess auf der Ringinnenseite der Nocke der Umschliessungswinkel (UW) vergrössert, insbesondere auf 360° gebracht wird. Dies geschieht insbesondere dadurch, dass die Nocken auf der Ringinnenseite im Bereich der Erhebung mit einem Eindruck versehen werden.

Um schliesslich die Nocken optimal an die jeweiligen Bedingungen anzupassen, kann es von Vorteil sein, wenn die Nocken aus einem Profilstreifen hergestellt werden, welcher zwei übereinanderliegende Schichten unterschiedlichen Materials aufweist.

Eine bevorzugte Ausgestaltung des erfindungsgemässen Verfahren zeichnet sich dadurch aus, dass die Welle zunächst in einem für den Sitz einer Nocke vorbestimmten Abschnitt im Aussendurchmesser vergrössert wird, und dass anschliessend die zugehörige Nocke auf diesen Abschnitt der Welle aufgeschoben wird. Insbesondere werden dabei zur Vergrösserung des Aussendurchmessers durch einen Rollvorgang umlaufende Wülste auf der Welle erzeugt.

Besonders vorteilhaft bezüglich der Nockenbefestigung ist es, wenn beim Umformen der Profilstreifen zu den Nocken durch einen zusätzlichen Umformschritt, insbesondere durch Einprägen eines Eindrucks, im Bereich der Erhebung der Nocke Material in axialer Richtung nach aussen transportiert und dort aufgeworfen wird, derart, dass die fertige Nocke die Welle mit einem Umschliessungswinkel von 360° umschliesst. Der zusätzliche Umformschritt wird vorzugsweise nach der umformtechnischen Ausbildung der Erhebung der Nocke vorgenommen.

Weitere Ausführungsformen ergeben sich aus den abhängigen Ansprüchen.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: in einer perspektivischen Darstellung einer gesinterten oder geschmiedeten Nocke nach dem Stand der Technik;
- Fig. 2: in einer perspektivischen Darstellung eine Welle aus dem Stand der Technik in Form eines Rohres mit einem im Aussendurchmesser vergrösserten Bereich zur Aufnahme von Nocken der in Fig. 1 dargestellten Art;
- Fig. 3: in der Seitenansicht den durch aufgerollte Wülste im Aussendurchmesser vergrösserten Bereich der Welle aus Fig. 2;
- Fig. 4: die Welle aus Fig. 2 mit einer ersten aufgeschobenen Nocke gemäss Fig. 1;
- Fig. 5: die Welle aus Fig. 3 mit einer zweiten aufgeschobenen Nocke gemäss Fig. 1, die eine Nockenwelle mit aufgeschobenen Nocken nach dem Stand der Technik bildet;
- Fig. 6: in Seitenansicht ein Profilstreifen, welcher den Ausgangspunkt für die an sich bekannte Fertigung einer biege- und prägetechnisch hergestellten, geschweissten Nocke bildet;
- Fig. 7: eine erste Umformvorrichtung, in welcher in einem ersten Umformungsvorgang in den Profilstreifen die Nockenform eingeformt wird;
- Fig. 8: eine zweite Umformvorrichtung, in welcher die freien Enden des gemäss Fig. 7 geprägten Profilstreifens zu einem geschlossenen Ring gebogen werden;
- Fig. 9: eine Schweissvorrichtung, in welcher die unverbundenen Enden des gebogenen Rings aus Fig. 8 mittels Widerstandsschweissung miteinander verschweisst werden;
- Fig. 10: die Umschliessung der Welle durch eine gemäss Fig. 6 - 9 hergestellte Nocke;
- Fig. 11: die für eine vollständige Umschliessung notwendige Ergänzungsfläche;
- Fig. 12: eine gemäss Fig. 6 - 9 hergestellte Nocke mit axialen Rippen zur Verbesserung der drehfesten Befestigung der Nocke auf der Welle;
- Fig. 13: einen speziell geformten Profilstreifen (Fig. 13A) und die daraus gemäss Fig. 6 - 9 gebildete Nocke mit Ergänzungsfläche (Fig. 13B);
- Fig. 14: einen speziell geformten Profilstreifen (Fig. 14A) und die daraus gemäss Fig. 6 - 9 gebildete Nocke mit verkleinerter Ergänzungsfläche (Fig. 13B);
- Fig. 15: zwei Profilstreifen aus einem einheitlichen Material (Fig. 15A) und einem zweischichtigen Material (Fig. 15B) zur Herstellung einer Nocke durch Prägen, Biegen und Schweissen;
- Fig. 16: den zu Fig. 7 identischen Umformvorgang in der ersten Umformvorrichtung;
- Fig. 17-19: die neuartige Umformung des vorgeprägten Profilstreifens mittels eines speziellen Umformwerkzeugs (Fig. 18), das im Innenbereich der Nockenerhebung Material in axialer Richtung nach aussen verdrängt und so die Ergänzungsfläche beidseitig ausfüllt;
- Fig. 20: den zu Fig. 8 analogen Biegevorgang des vorgeprägten und umgeformten Profilstreifens ;
- Fig. 21: den zu Fig. 9 analogen Schweissvorgang des zum Ring gebogenen Profilstreifens;
- Fig. 22: in einer zu Fig. 1 analogen Darstellung eine gemäss Fig. 15 - 21 hergestellte Nocke mit ausgefülltem Hohlraum;
- Fig. 23: das Aufschieben der Nocke aus Fig. 22 auf eine Welle gemäss Fig. 2; und
- Fig. 24: in einer Schnittdarstellung die Volumenverhältnisse bei der Umformung gemäss Fig. 17 - 19.

### WEGE ZUR AUSFÜHRUNG DER ERFINDUNG

In Fig. 1-5 sind verschiedene Schritte eines Verfahrens zum Herstellen einer gebauten Nockenwelle wiedergegeben, wie es aus dem Stand der Technik, z.B. der Druckschrift US-A-4,947,547, bekannt ist. Zunächst werden Nocken 10 der in Fig. 1 dargestellten Art durch einen pulvermetallurgischen Prozess (Sintern) hergestellt. Sie können aber auch gegossen oder geschmiedet sein. Die ringförmigen Nocken 10 haben eine kreisförmige Ausnehmung 11, durch welche eine Welle 13 gemäss Fig. 2 gesteckt werden kann. Die Steuerfunktion der Nocke 10 wird durch eine einseitige Erhebung 49 bewirkt, die beim Abfahren der äusseren Ablauffläche durch ein Steuerelement, z.B. einen Kipphebel, ein Anheben des Steuerelements zur Folge hat. Auf der Ringinnenseite, d.h., auf der Begrenzungsfläche der Ausnehmung 11 sind über den Umfang verteilt mehrere, sich in axialer Richtung erstreckende Vorsprünge oder Rippen 12 angeordnet, die eine wesentliche Bedeutung für die formschlüssige Verbindung zwischen Nocke 10 und Welle 13 haben. Die Nocke 10 ist aus Vollmaterial, d.h., es gibt keine Hohlräume zwischen der äusseren Ablauffläche und der kreisförmigen Ausnehmung 11. Sitzt die Nocke 10 auf der Welle 13, umschliesst sie die Welle 13 vollständig. Der Umschliessungswinkel beträgt 360°. Entsprechend steht die gesamte Begrenzungsfläche der Ausnehmung 11 für den Kraft- und/oder Formschluss mit der Welle 13 zur Verfügung.

Die in Fig. 2 gezeigte Welle 13 ist zur Gewichts- und Materialersparnis vorzugsweise als Hohlwelle ausgebildet, die sich entlang einer Achse 51 erstreckt. Es ist aber auch eine Vollwelle denkbar. Um die Nocke 10 kraft- und formschlüssig auf der Welle zu befestigen, wird zunächst auf einem Abschnitt der Welle 13, welcher der späteren Position der Nocke zugeordnet ist, durch einen Umformprozess eine lokale Vergrösserung des Aussendurchmessers der Welle 13 durchgeführt. Hierzu wird vorzugsweise ein Nullsteigungsgewinde auf die Welle 13 aufgerollt, das sich durch eine Mehrzahl von parallelen, umlaufenden Wülsten 14 auszeichnet (Fig. 3). Gewinde mit endlicher Steigung sind ebenfalls denkbar. Andere mögliche Arten der lokalen Durchmesservergrösserung sind in der US-A-5,598,631 beschrieben. Der vergrösserte Aussendurchmesser ist annähernd gleich dem Innendurchmesser der Ausnehmung 11 der Nocke 10. Die Höhe der Vorsprünge 12 ist so gewählt, dass der zwischen gegenüberliegenden Vorsprüngen gemessene Abstand etwas grösser als der unveränderte Aussendurchmesser der Welle ist.

Auf die so vorbereitete Welle 13 wird dann die Nocke 10 in axialer Richtung aufgeschoben. Erreicht die Nocke 10 den Abschnitt mit der lokalen Durchmesservergrösserung, schneiden sich die Vorsprünge 12 in die Wülste 14 des Nullsteigungsgewindes ein und stellen so einen Formschluss zwischen Welle 13 und Nocke 10 her. Nachdem die eine Nocke 10 auf die beschriebene Weise auf der Welle 13 befestigt ist, wird für die nächste Nocke (10' in Fig. 5) ein weiterer Wellenabschnitt mit Wülsten 15 versehen (Fig. 4) und so im Aussendurchmesser vergrössert. Auf diesen Abschnitt wird dann gemäss Fig. 5 die nächste Nocke 10' aufgeschoben und befestigt. Dieses Verfahren wird schrittweise wiederholt, bis die gewünschte Anzahl Nocken in der gewünschten Orientierung auf der Welle 13 befestigt sind. Die so gebaute Nockenwelle 16 kann dann für ihren endgültigen Einsatz nachbearbeitet (gerichtet, geschliffen etc.) werden.

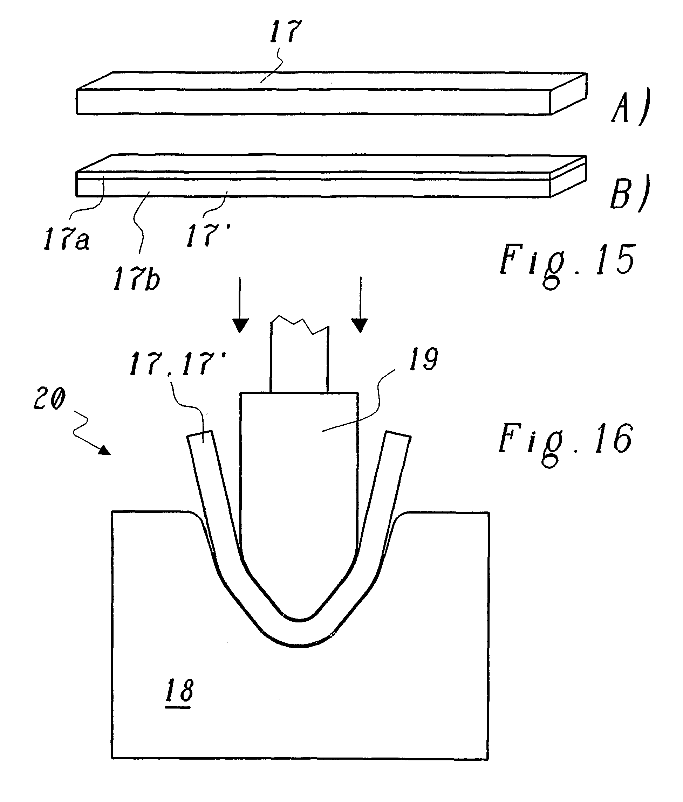

Wie bereits eingangs erwähnt, ist es aus der WO-A1-01/98020 bekannt, Nocken für gebaute Nockenwellen durch Biegen und Schweissen aus einem Profilstreifen herzustellen. Die prinzipiellen Schritte dazu sind in den Fig. 6-9 schematisch wiedergegeben. Ausgangspunkt der Nockenherstellung ist ein Profilstreifen 17 mit einem im wesentlichen rechteckigen Querschnitt der in Fig. 6 dargestellten Art. Der Profilstreifen 17 kann aus einem einzigen Material, z.B. einem Oberflächenhärtbaren Stahl, bestehen. Er kann aber auch zur Optimierung der Eigenschaften mehrschichtig aufgebaut sein (siehe Fig. 15B). Besteht der Profilstreifen aus einem einzigen Material, ist es besonders kostengünstig, diesen umformtechnisch, insbesondere walztechnisch, aus einem runden Draht zu erzeugen, weil drahtförmiges Material in der Regel zum niedrigsten Preis angeboten wird.

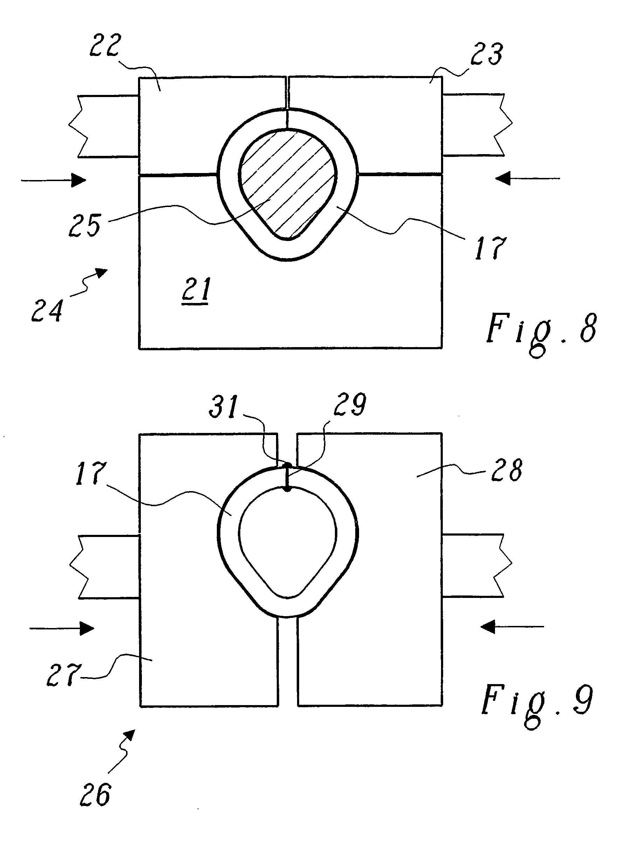

Der gerade Profilstreifen 17 wird gemäss Fig. 7 in einem ersten Umformungsschritt in einer ersten Umformvorrichtung 20, die im wesentlichen aus einer Form 18 und einem Umformwerkzeug 19 besteht, durch Biegen umgeformt. Dabei wird die spätere Erhebung der Nocke ausgebildet. Das V-förmige Zwischenprodukt wird dann in einer zweiten Umformvorrichtung 24 gemäss Fig. 8, die im wesentlichen aus einer Halterung 21, einem Dom oder Biegekern 25 und zwei Umformwerkzeugen 22, 23 besteht, einem zweiten Umform- bzw. Biegeprozess unterworfen. Dabei werden die Schenkel des V-förmigen Zwischenprodukts mittels der Umformwerkzeuge 22, 23 so um den Dom 25 gebogen, dass die freien Enden mit den Stirnseiten aneinander stossen und sich ein geschlossener Ring bildet. Der geschlossene Ring wird dann an der Stossfuge verschweisst. Hierzu wird der Ring beispielsweise in eine Schweissvorrichtung 26 gemäss Fig. 9 eingelegt und mittels der beiden mit Druck aufeinander zu bewegten Elektroden bzw. Druckstempel 27, 28 durch eine Widerstandsschweissung verschweisst. Beim Widerstandsschweissen bildet sich um die Schweissnaht 29 herum ein Wulst 31, der eine Nacharbeitung der Schweissstelle erforderlich macht.

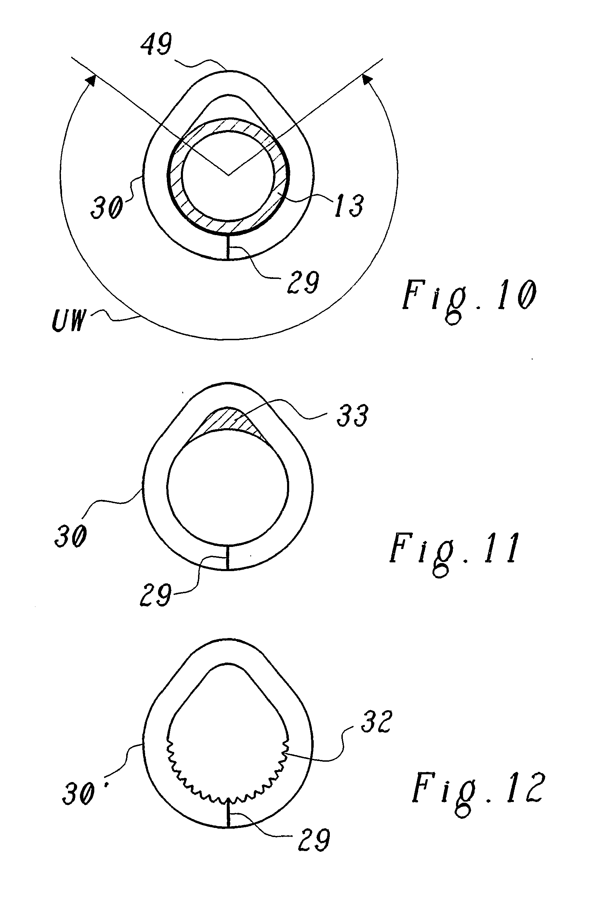

Wird eine derartig gefertigte Nocke 30 gemäss Fig. 10 durch axiales Aufschieben auf eine Welle 13 kraft- und/oder formschlüssig mit der Welle verbunden, ergibt sich unterhalb der Erhebung 49 der Nocke 30 ein Hohlraum 33 (Fig. 11). Der Umschliessungswinkel UW (Fig. 10) beträgt dann deutlich weniger als 360°. Entsprechend ist nur ein Teil der Ringinnenfläche der Nocke 30 am Kraft- und/oder Formschluss mit der Welle 13 beteiligt. Um den Kraft- und Formschluss zu verbessern und trotz der verringerten Fläche eine gute Festigkeit der Verbindung zwischen Nocke 30 und Welle 13 zu erhalten, können auf der Ringinnenseite zusätzliche Mittel wie z.B. über den Umfang verteilt angeordnete Vorsprünge (vergleichbar zu den Vorsprüngen 12 in Fig. 1) oder Rippen 32 (Fig. 12) vorgesehen werden. Diese Mittel lassen sich durch geeignete Massnahmen beim Umformen der Profilstreifen zu den Nocken umformtechnisch auf der Ringinnenseite erzeugen. Die Verformbarkeit der Nocke 30 im Bereich des Hohlraums kann dadurch allerdings nicht beeinflusst werden.

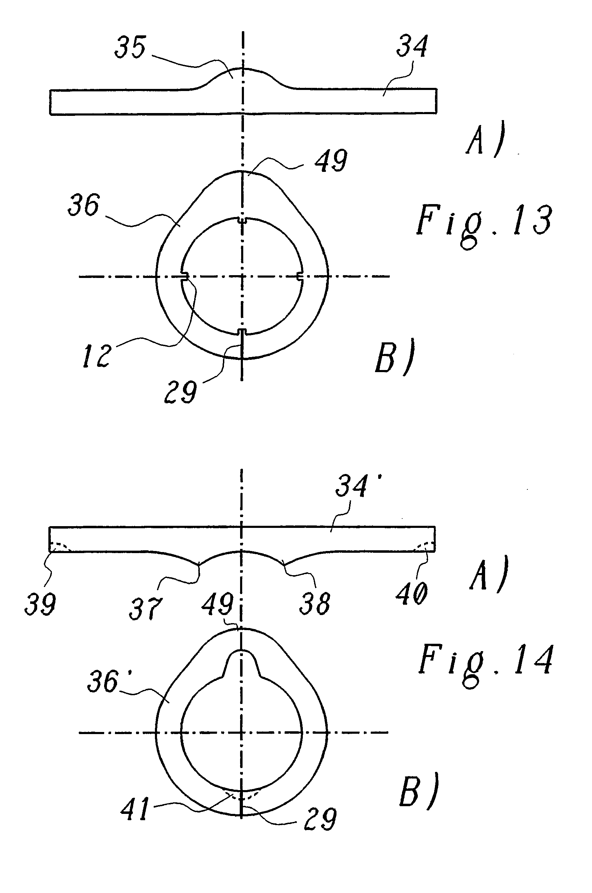

Eine weitere Möglichkeit der Verbesserung des Kraft- und/oder Formschlusses zwischen der Welle und der aufgeschobenen Nocke besteht darin, den Umschliessungswinkel UW durch geeignete Formgebung der Profilstreifen mit einer variierenden Streifendicke zu vergrössern oder sogar auf volle 360° zu bringen. Zwei Beispiele für derartige Formgebungen sind in den Fig. 13 und 14 wiedergegeben. In Fig. 13 wird aus einem Profilstreifen 34 (Fig. 13A), der in der Mitte eine zur Mittellinie symmetrische Verdickung 35 aufweist, durch Biegen und Verschweissen eine Nocke 36 (Fig. 13B) erzeugt, die keinen Hohlraum zwischen der Erhebung 49 und der Welle aufweist und einen Umschliessungswinkel von vollen 360° hat. Die Nocke 36 hat damit weitgehend dieselben mechanischen und Festigkeitseigenschaften wie die herkömmliche Nocke 10 aus Fig. 1. Auch der Form- und Kraftschluss mit der Welle ist vergleichbar mit der Nocke 10 aus Fig. 1. Entsprechend ist auch die Wirkung der Vorsprünge 12 auf der Ringinnenseite.

In Fig. 14 wird aus einem Profilstreifen 34' (Fig. 14A), der in der Mitte zwei symmetrisch zur Mittellinie angeordnete Schultern 37, 38 aufweist, durch Biegen und Verschweissen eine Nocke 36' (Fig. 14B) erzeugt, deren Hohlraum gegenüber der Nocke 30 aus Fig. 10 verkleinert und deren Umschliessungswinkel vergrössert ist. Selbstverständlich können auch bei dieser Nocke 36' auf der Ringinnenseite zusätzliche Mittel zur Verbesserung des Kraft- und Formschlusses vorgesehen werden. Weiterhin können am Profilstreifen 34' an den Enden Aussparungen 39, 40 (in Fig. 14 gestrichelt eingezeichnet) vorgesehen werden, die sich bei der fertigen Nocke 36' zu einer Aussparung 41 im Bereich der Schweissnaht 29 addieren. Durch diese Aussparung 41 wird Platz für die beim Widerstandsschweissen auf der Ringinnenseite entstehenden Wülste (31 in Fig. 9) geschaffen. Eine (aufwändige) Nachbearbeitung der Schweissnaht auf der Ringinnenseite kann auf diese Weise entfallen.

Besonders vorteilhaft ist ein Verfahren zum Herstellen einer gebauten Nockenwelle, bei dem aus einem flachen Profilstreifen konstanter Dicke durch Biegen und anschliessendes Verschweissen eine Nocke erzeugt wird, die einen Umschliessungswinkel von 360° aufweist. Der volle Umschliessungswinkel wird dabei durch einen zusätzlichen, zwischengeschalteten Umformungsprozess erreicht, bei dem Nockenmaterial aus dem Bereich unterhalb der Erhebung verdrängt und axial nach aussen gedrückt wird, um dort den Hohlraum zwischen Nocke und Welle zu füllen und den Umschliessungswinkel auf 360° zu ergänzen. Die einzelnen Schritte des Verfahrens sind in den Figuren 15-23 wiedergegeben. Ausgegangen wird gemäss Fig. 15 von flachen Profilstreifen 17 bzw. 17' konstanter Dicke. Die Profilstreifen können aus einem einzigen Material sein (Profilstreifen 17 in Fig. 15A) oder mehrschichtig aufgebaut sein (Profilstreifen 17' in Fig. 15B mit den Schichten 17a, 17b) Die Schichten 17a, 17b können beispielsweise ähnlich gewählt sein, wie in der WO-A1-02/100588.

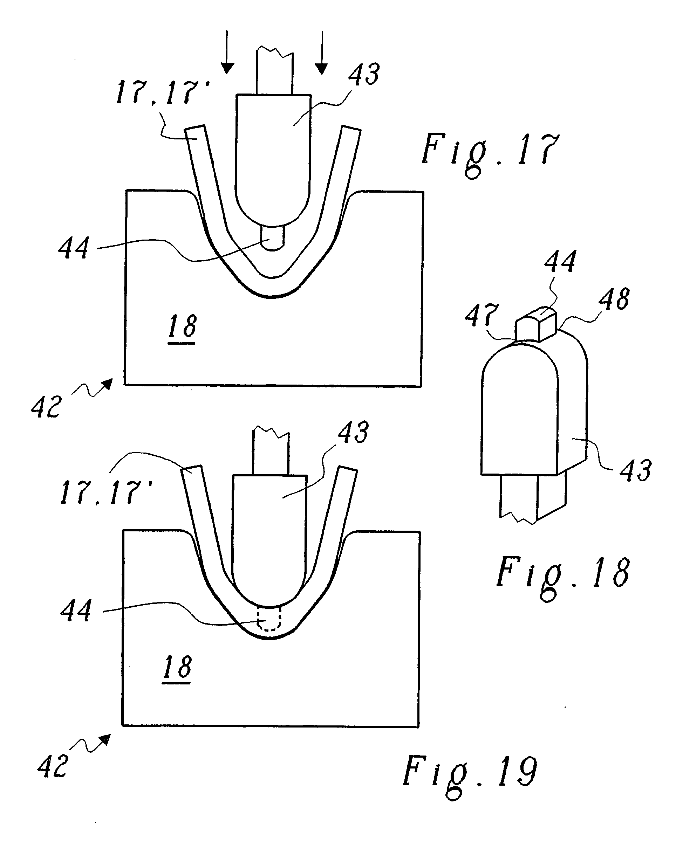

In einem ersten Umformungsschritt wird der Profilstreifen 17 bzw. 17' in einer ersten Umformvorrichtung 20 mittels eines ersten Umformwerkzeugs 19 (Stempel) und einer Form so gebogen, dass die spätere Erhebung 49 der Nocke gebildet wird. Dieser Umformschritt ist analog zu dem in Fig. 7 gezeigten Vorgang. Der so gebogene Profilstreifen 17, 17' wird nun in derselben Form 18 in einer zweiten Umformvorrichtung 42 einem zweiten, zusätzlichen Umformschritt unterworfen (Fig. 17, 19), bei dem ein zweites Umformwerkzeug 43 (Prägestempel) prägend auf die Innenseite des gebogenen Profilstreifens 17,17' gedrückt wird. Wie aus der perspektivischen Darstellung der Fig. 18 ersichtlich ist, hat das zweite Umformwerkzeug 43 an seiner Oberseite ein nach oben herausstehendes Kopfteil 44, an das seitlich zwei tieferliegende, kreisbogenförmige Schultern 47, 48 anschliessen. Der Krümmungsradius der Schultern 47, 48 ist so gewählt, dass er dem Radius der Ausnehmung einer die Welle umschliessenden Nocke gleicht.

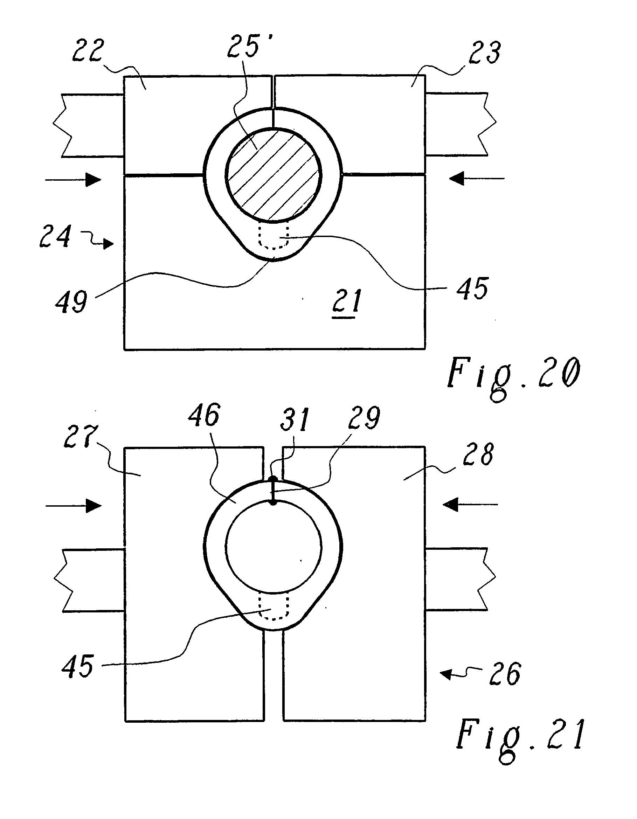

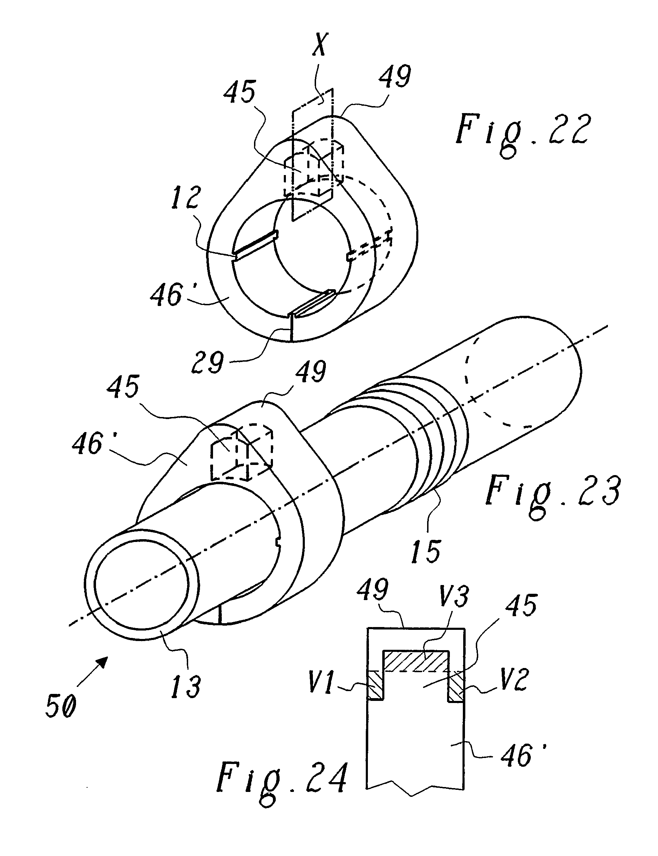

Durch das Kopfteil 44 des zweiten Umformwerkzeugs 43 wird nun gemäss Fig. 19 im Bereich der späteren Erhebung 49 der Nocke ein Eindruck 45 (Fig. 20-22, 24) erzeugt. Durch den Eindruck 45 wird - wie dies an dem in Fig. 24 dargestellten Nockenquerschnitt entlang der Fläche X der in Fig. 22 gezeigten fertigen Nocke 46' zu erkennen ist - Nockenmaterial des Volumens V3 aus der Mitte axial nach aussen verdrängt und dort zu Wänden mit den Volumina V1 und V2 aufgeworfen. Radial nach innen zu werden diese Wände beim Umformprozess begrenzt durch die Schultern 47, 48 des zweiten Umformwerkzeugs 43. Auf diese Weise wird an den Seiten der Nocke der in Fig. 11 dargestellte Hohlraum 33 geschlossen. Durch die aufgeworfenen Wände wird die Nocke im Bereich der Erhebung 49 mechanisch stabilisiert. Zugleich wird in den Randbereichen der Nocke ein Umschliessungswinkel von vollen 360° erreicht, der eine vorteilhafte Verbesserung des Kraft- und/oder Formschlusses zwischen Welle und Nocke zur Folge hat.

Der im zweiten Umformschritt umgeformte und mit dem Eindruck 45 versehene Profilstreifen wird in einem dritten Umformschritt gemäss Fig. 20 in einer dritten Umformvorrichtung 24 zu einem geschlossenen Ring gebogen, dessen freie Enden stirnseitig aneinanderstossen. Dieser Umformschritt ist analog zu dem in Fig. 8 gezeigten, mit dem Unterschied, dass nunmehr um einen Dorn 25' mit kreisrundem Querschnitt gebogen werden kann. Schliesslich wird der so geschlossene Nockenring gemäss Fig. 21 in Analogie zu Fig. 9 mittels Widerstandsschweissen verschweisst. Diese resultierende Nocke 46 zeichnet sich durch eine kreisrunde Ausnehmung aus, mit der sie auf eine Welle geschoben werden kann. Selbstverständlich können bei einer solchen Nocke auf der Ringinnenseite auch wieder Mittel zur Verbesserung des Formschlusses wie z.B. Vorsprünge 12 eingeformt werden. Es resultiert dann eine Nocke 46' gemäss Fig. 22, die dann gemäss Fig. 23 zur Bildung einer Nockenwelle 50 auf eine Welle 13 geschoben und durch Form- und/oder Kraftschluss befestigt werden kann.

Die Erfindung ist vorgängig anhand von Ausführungsbeispielen erläutert worden, bei denen die Nocken aus einem einzigen, langen Profilstreifen durch Biegen und anschliessendes Verschweissen gebildet worden sind. Selbstverständlich können die Nocken auch aus mehreren kürzeren Profilstreifen gebildet bzw. zusammengesetzt werden, die untereinander an den freien Enden verschweisst werden.

### BEZUGSZEICHENLISTE

- 10,10': Nocke (gesintert, geschmiedet)
- 11: Ausnehmung
- 12: Vorsprung
- 13: Welle (insbesondere Rohr)
- 14,15: Wulst
- 16: Nockenwelle
- 17,17': Profilstreifen
- 17a,17b: Schicht
- 18: Form
- 19: Umformwerkzeug
- 20: Umformvorrichtung
- 21: Halterung
- 22,23: Umformwerkzeug
- 24: Umformvorrichtung
- 25: Dorn
- 26: Schweissvorrichtung (Widerstandsschweissen)
- 27,28: Elektroden (Druckstempel)
- 29: Schweissnaht
- 30,30': Nocke (gebogen, geschweisst)
- 31: Wulst
- 32: Rippe
- 33: Hohlraum
- 34,34': Profilstreifen
- 35: Verdickung
- 36,36': Nocke (gebogen, geschweisst)
- 37,38: Schulter
- 39,40,41: Aussparung
- 42: Umformvorrichtung
- 43: Umformwerkzeug
- 44: Kopfteil
- 45: Eindruck
- 46,46': Nocke (gebogen, geschweisst)
- 47,48: Schulter
- 49: Erhebung
- 50: Nockenwelle
- 51: Achse
- D: Dicke
- UW: Umschliessungswinkel
- V1,..,V3: Volumen

## Patentansprüche

1. Verfahren zum Herstellen einer Nockenwelle, bei welchem Verfahren Nocken (30, 30'; 36, 36'; 46, 46') aus einem oder mehreren Profilstreifen (17, 17'; 34, 34') durch Biegen und anschliessendes Verschweissen der freien Enden hergestellt, auf eine Welle (13) aufgeschoben und an einem vorgegebenen Platz und in einer vorgegebenen Ausrichtung form- und/oder kraftschlüssig mit der Welle (13) verbunden werden,
**dadurch gekennzeichnet, dass**
der Profilstreifen (17, 17') zu den Nocken (46, 46') umgeformt wird, wobei eine Erhebung (49) entsteht, und anschliessend durch einen zusätzlichen Umformschritt durch Einprägen eines Eindrucks (45) im Bereich der Erhebung (49) der Nocke (46, 46') Material in axialer Richtung nach aussen transportiert und dort aufgeworfen wird, derart, dass die fertige Nocke (46, 46') die Welle (13) mit einem Umschliessungswinkel von 360° umschliesst.

2. Verfahren nach Anspruch 1, **dadurch gekennzeichnet, dass** die Welle (13) rohrförmig ausgebildet ist.

3. Verfahren nach einem der Ansprüche 1 oder 2, **dadurch gekennzeichnet, dass** die Welle (13) in den Abschnitten, in denen die Nocken (30, 30'; 36, 36'; 46, 46') platziert sind, einen vergrösserten Aussendurchmesser aufweist.

4. Verfahren nach Anspruch 3, **dadurch gekennzeichnet, dass** in den Abschnitten mit dem vergrösserten Aussendurchmesser umlaufende Wülste (14, 15) in die Welle (13) eingearbeitet sind.

5. Verfahren nach einem der Ansprüche 3 oder 4, **dadurch gekennzeichnet, dass** die Nocken (30', 46') auf der Ringinnenseite Mittel (12, 32) zur Erzeugung eines Formschlusses mit der Welle (13) aufweisen.

6. Verfahren nach Anspruch 5, **dadurch gekennzeichnet, dass** die Mittel zur Erzeugung eins Formschlusses radial nach innen abstehende Vorsprünge (12) oder Rippen (32) umfassen.

7. Verfahren nach einem der Ansprüche 1 bis 6, **dadurch gekennzeichnet, dass** die freien Enden der Nocken (30, 30'; 36, 36'; 46, 46') mittels Widerstandsschweissen verschweisst sind.

8. Verfahren nach Anspruch 7, **dadurch gekennzeichnet, dass** die Nocken im Bereich der Schweissnaht (29) auf der Ringinnenseite eine Aussparung (41) aufweisen, welche die beim Schweissen gebildete Wulst (31) aufnimmt.

9. Verfahren nach einem der Ansprüche 1 bis 8, **dadurch gekennzeichnet, dass** die Nocken (36, 36') aus einem Profilstreifen (34, 34') mit einer über die Streifenlänge variierenden Dicke hergestellt werden, derart, dass die Nocken (36, 36') die Welle (13) mit einem Umschliessungswinkel (UW) umschliessen, welcher grösser ist als der bei gleichbleibender Streifendicke des Profilstreifens durch die Nockenform vorgegebene Umschliessungswinkel, und insbesondere 360° beträgt.

10. Verfahren nach Anspruch 9, **dadurch gekennzeichnet, dass** der Profilstreifen (34') zwei symmetrisch zu einer Mittelebene angeordnete Schultern (37, 38) aufweist.

11. Verfahren nach Anspruch 9, **dadurch gekennzeichnet, dass** der Profilstreifen (34) in der Mitte eine Verdickung (35) aufweist.

12. Verfahren nach einem der Ansprüche 1 bis 8, **dadurch gekennzeichnet, dass** die Nocken (46, 46') aus einem Profilstreifen (17, 17') konstanter Dicke hergestellt werden, und dass durch einen Umformprozess auf einer Ringinnenseite der Nocke der Umschliessungswinkel (UW) vergrössert, insbesondere auf 360° gebracht wird.

13. Verfahren nach Anspruch 12, **dadurch gekennzeichnet, dass** die Nocken (30, 30'; 36, 36'; 46, 46') aus einem Profilstreifen (17') hergestellt werden, welcher zwei übereinanderliegende Schichten (17a, 17b) unterschiedlichen Materials aufweist.

14. Verfahren nach Anspruch einem der Ansprüche 1 bis 13, **dadurch gekennzeichnet, dass** die Welle (13) zunächst in einem für den Sitz einer Nocke vorbestimmten Abschnitt im Aussendurchmesser vergrössert wird, und dass anschliessend die zugehörige Nocke auf diesen Abschnitt der Welle (13) aufgeschoben wird.

15. Verfahren nach Anspruch 14, **dadurch gekennzeichnet, dass** zur Vergrösserung des Aussendurchmessers durch einen Rollvorgang umlaufende Wülste (14, 15) auf der Welle (13) erzeugt werden.

16. Verfahren nach einem der Ansprüche 1 bis 15, **dadurch gekennzeichnet, dass** zur Herstellung der Nocken (36, 36') ein Profilstreifen (34, 34') verwendet wird, welcher eine variierende Dicke aufweist, derart, dass die Nocken (36, 36') die Welle (13) mit einem Umschliessungswinkel (UW) umschliessen, welcher grösser ist als der bei gleichbleibender Streifendicke des Profilstreifens durch die Nockenform vorgegebene Umschliessungswinkel, und insbesondere 360° beträgt.

17. Verfahren nach einem der Ansprüche 1 bis 16, **dadurch gekennzeichnet, dass** durch einen Umformprozess auf der Ringinnenseite der Nocken (30', 46') Mittel (12, 32) zur Erzeugung eines Formschlusses mit der Welle (13) erzeugt werden, welche insbesondere radial nach innen abstehende Vorsprünge (12) oder Rippen (32) umfassen.

18. Verfahren nach einem der Ansprüche 1 bis 17, **dadurch gekennzeichnet, dass** die Profilstreifen (17, 17'; 34, 34') aus einem runden Draht umformtechnisch, insbesondere walztechnisch, erzeugt werden.

## Claims

1. A method for producing a camshaft, in which method cams (30, 30'; 36, 36'; 46, 46') are produced from one or more profile strips (17, 17'; 34, 34') by bending and subsequent welding together of the free ends, are then slid onto a shaft (13) and are positively and/or non-positively connected to the shaft (13) at a predefined location and in a predefined alignment, **characterized in that** the profile strips (17, 17') are transformed into the cams (46, 46'), whereby an elevation is formed and subsequently, by an additional forming step, in particular by the impression of an indentation (45), material is transported outward in the axial direction in the region of the elevation (49) of the cam (46, 46') and is heaped up there in such a way that the finished cam (46, 46') encloses the shaft (13) with an angle of enclosure of 360°.

2. The method as claimed in claim 1, **characterized in that** the shaft (13) is of tubular configuration.

3. The method as claimed in one of claims 1 or 2, **characterized in that** the shaft (13), in the sections in which the cams (30, 30'; 36, 36'; 46, 46') are placed, has an enlarged external diameter.

4. The method as claimed in claim 3, **characterized in that**, in the sections having the enlarged external diameter, circumferential beads (14, 15) are incorporated in the shaft.

5. The method as claimed in one of claims 3 or 4, **characterized in that** the cams (30', 46') have on the inner side of the ring means (12, 32) for creating a positive connection to the shaft (13).

6. The method as claimed in claim 5, **characterized in that** the means for creating a positive connection comprise projections (12) or ribs (32) which protrude radially inward.

7. The method as claimed in one of claims 1 to 6, **characterized in that** the free ends of the cams (30, 30'; 36, 36'; 46, 46') are welded together by means of resistance welding.

8. The method as claimed in claim 7, **characterized in that** the cams have a recess (41) in the region of the weld seam (29) on the inner side of the ring, which recess receives the bead (31) formed during the welding.

9. The method as claimed in one of claims 1 to 8, **characterized in that** the cams (36, 36') are produced in such a way from a profile strip (34, 34') of thickness which varies over the strip length that the cams (36, 36') enclose the shaft (13) with an angle of enclosure (UW) which is greater than the angle of enclosure which is predefined by the cam profile if the strip thickness is constant, and in particular measures 360°.

10. The method as claimed in claim 9, **characterized in that** the profile strip (34') has two shoulders (37, 38) disposed symmetrically to a center plane.

11. The method as claimed in claim 9, **characterized in that** the profile strip (34) has in the middle a thickening (35).

12. The camshaft as claimed in one of claims 1 to 8, **characterized in that** the cams (46, 46') are produced from a profile strip (17, 17') of constant thickness, and **in that**, on the inner side of the ring of the cam, the angle of enclosure (UW) is enlarged by a forming process, in particular is brought to 360°.

13. The camshaft as claimed in claim 12, **characterized in that** the cams (30, 30'; 36, 36'; 46, 46') are produced from a profile strip (17') which has two layers (17a, 17b) of different material lying one above the other.

14. The method as claimed in one of claims 1 to 13, **characterized in that** the shaft (13) is first enlarged in terms of the external diameter in a section which is earmarked for the seat of a cam, and **in that** the associated cam is subsequently slid onto this section of the shaft (13).

15. The method as claimed in claim 14, **characterized in that**, for the enlargement of the external diameter, circumferential beads (14, 15) are created on the shaft (13) by a rolling operation.

16. The method as claimed in one of claims 1 to 15, **characterized in that**, for the production of the cams (36, 36'), a profile strip (34, 34') of varying thickness is used, such that the cams (36, 36') enclose the shaft (13) with an angle of enclosure (UW) which is greater than the angle of enclosure which is predefined by the cam profile if the strip thickness is constant, and in particular measures 360°.

17. The method as claimed in one of claims 1 to 16, **characterized in that**, on the inner side of the ring of the cams (30', 46'), means (12, 32) for creating a positive connection to the shaft (13) are produced by a forming process, which means comprise, in particular, projections (12) or ribs (32) which protrude radially inward.

18. The method as claimed in one of claims 1 to 17, **characterized in that** the profile strips (17, 17'; 34, 34' are created from a round wire by forming methods, in particular by rolling methods.

## Revendications

1. Procédé pour fabriquer un arbre à cames dans lequel procédé des cames (30, 30' ; 36, 36' ; 46, 46') sont fabriquées à partir d'une ou plusieurs bandes profilées (17, 17' ; 34, 34') par flexion puis soudage des extrémités libres, poussées sur un arbre (13) et reliées à un emplacement préalablement prévu et selon une orientation préalablement prévue par complémentarité de formes et/ou de forces avec l'arbre (13), **caractérisé en ce que** les bandes profilées (17, 17') sont déformées en cames (46, 46'), provoquant un soulèvement (49) puis transportant la matière dans la direction axiale vers l'extérieur et la retournant du fait d'une étape de déformation supplémentaire, par emboutissage d'une impression (45) dans la zone du soulèvement (49) de la came (46, 46'), de telle sorte que la came (46, 46') finie entoure l'arbre (13) avec un angle de fermeture de 360°.

2. Procédé selon la revendication 1, **caractérisé en ce que** l'arbre (13) prend une forme tubulaire.

3. Procédé selon l'une quelconque des revendications 1 ou 2, **caractérisé en ce que** l'arbre (13) comporte un diamètre extérieur agrandi dans les segments dans lesquels les cames (30, 30' ; 36, 36' ; 46, 46') sont placées.

4. Procédé selon la revendication 3, **caractérisé en ce que** des bourrelets (14, 15) périphériques sont ménagés dans l'arbre (13), dans les segments de diamètre extérieur agrandi.

5. Procédé selon l'une quelconque des revendications 3 ou 4, **caractérisé en ce que** les cames (30', 46') comportent des moyens (12, 32) pour produire une complémentarité de formes avec l'arbre (13) sur le côté annulaire intérieur.

6. Procédé selon la revendication 5, **caractérisé en ce que** les moyens pour produire une complémentarité de formes englobent des saillies (12) ou des nervures (32) saillant vers l'intérieur dans le plan radial.

7. Procédé selon l'une quelconque des revendications 1 à 6, **caractérisé en ce que** les extrémités libres des cames (30, 30' ; 36, 36' ; 46, 46') sont soudées par soudage par résistance.

8. Procédé selon la revendication 7, **caractérisé en ce que** les cames comportent dans la zone de la soudure (29) un évidement (41) sur le côté annulaire intérieur qui reçoit lors de la soudure le bourrelet (31) formé.

9. Procédé selon l'une quelconque des revendications 1 à 8, **caractérisé en ce que** les cames (36, 36') sont fabriquées à partir d'une bande profilée (34, 34') avec une épaisseur variable sur la longueur de la bande, de telle sorte que les cames (36, 36') entourent l'arbre (13) avec un angle de fermeture (UW) supérieur à l'angle de fermeture préalablement prévu par la forme de la came lorsque l'épaisseur de bande de la bande profilée est constante et notamment de 360°.

10. Procédé selon la revendication 9, **caractérisé en ce que** la bande profilée (34') comporte deux épaulements (37, 38) symétriques par rapport à un plan moyen.

11. Procédé selon la revendication 9, **caractérisé en ce que** la bande profilée (34) comporte une grosseur (35) en son centre.

12. Procédé selon l'une quelconque des revendications 1 à 8, **caractérisé en ce que** les cames (46, 46') sont fabriquées à partir d'une bande profilée (17, 17') d'épaisseur constante et qu'un processus de déformation permet d'agrandir l'angle de fermeture (UW) sur un côté annulaire intérieur de la came, notamment à 360°.

13. Procédé selon la revendication 12, **caractérisé en ce que** les cames (30, 30' ; 36, 36' ; 46, 46') sont fabriquées à partir d'une bande profilée (17') comportant deux couches (17a, 17b) superposées réalisées à partir de matériaux différents.

14. Procédé selon l'une quelconque des revendications 1 à 13, **caractérisé en ce que** le diamètre extérieur de l'arbre (13) est ensuite agrandi dans un segment prédéfini pour le siège d'une came et que la came associée est ensuite poussée sur ce segment de l'arbre (13).

15. Procédé selon la revendication 14, **caractérisé en ce que** pour agrandir le diamètre extérieur à l'aide d'une opération de roulement, des bourrelets périphériques (14, 15) sont réalisés sur l'arbre (13).

16. Procédé selon l'une quelconque des revendications 1 à 15, **caractérisé en ce qu'**une bande profilée (34, 34') est utilisée pour la fabrication des cames (36, 36'), ladite bande comportant une épaisseur variable, de telle sorte que les cames (36, 36') entourent l'arbre (13) avec un angle de fermeture (UW) supérieur à l'angle de fermeture préalablement prévu par la forme des cames lorsque l'épaisseur de bande de la bande profilée est constante et notamment de 360°.

17. Procédé selon l'une quelconque des revendications 1 à 16, **caractérisé en ce qu'**un processus de déformation permet de produire sur le côté annulaire intérieur des cames (30', 46') des moyens (12, 32) pour produire une complémentarité de formes avec l'arbre (13), lesdits moyens comportant notamment des saillies (12) ou des nervures (32) saillant vers l'intérieur dans le plan radial.

18. Procédé selon l'une quelconque des revendications 1 à 17, **caractérisé en ce que** la bande profilée (17, 17' ; 34, 34') est produite à partir d'un fil rond selon la technique de la déformation, notamment du laminage.
